# EUROPÄISCHE PATENTSCHRIFT

(11) **EP 0 505 707 B1**
(45) Veröffentlichungstag und Bekanntmachung des Hinweises auf die Patenterteilung: **22.01.1997**
(21) Anmeldenummer: 92102141.6
(22) Anmeldetag: 08.02.1992
(51) Int. Cl.: B65G 53/46

(54) **Zellenradschleuse**
Rotary valve
Ecluse à roue cellulaire

(30) Priorität: 27.03.1991 DE 4110036
(43) Veröffentlichungstag der Anmeldung: 30.09.1992
(73) Patentinhaber: MOTAN-FULLER Verfahrenstechnik GmbH, 88242 Weingarten (DE)
(72) Erfinder: Heep, Dieter, W-7961 Bergatreute (DE); Isopp, Gottfried, W-7982 Baindt (DE)
(74) Vertreter: Riebling, Peter, Dr.-Ing., Patentanwalt

(56) Entgegenhaltungen:
- DE-A- 1 481 471
- DE-A- 1 945 950
- DE-A- 2 419 841
- DE-A- 2 638 778
- DE-B- 1 263 596
- DE-C- 131 174

## Beschreibung

Die Erfindung betrifft eine Zellenradschleuse der im Oberbegriff des Anspruches 1 angegebenen Art.

Diese Zellenradschleusen werden benutzt, um rieselfähiges Schüttgut in eine pneumatische Förderleitung einzuschleusen. Um dies mit Kunststoffgranulat, insbesondere bei einer schonenden Förderung mit Druckdifferenzen von Delta p = 3 bar, durchzuführen, müssen Anstrengungen unternommen werden, um die Leckageluft so gering wie möglich zu halten.

Dies geschieht mit Hilfe von berührenden, seitlichen Abdichtungen, wie in der DE-C-37 42 521 oder in der DE-C-37 42 522 beschrieben, oder durch Minimierung der Dichtspalte wie in DE-A-40 19 628 nachveröffentlicht vorgeschlagen und in anderer Weise in DE-A-40 19 627 nachveräffentlicht dargestellt. Die DE-A-39 10 617 verwendet breite Stege, nicht wegen der Dichtspaltlänge, sondern um eine Zellenradblockierung durch Schüttgut zu verhindern.

Unabhängig von den Kosteneinsparungen durch Minimierung der Leckluft besteht die Schwierigkeit, daß die Leckluft den Zulauf des Schüttgutes in die Schleuse entscheidend behindern kann. Je nach Leckluftmenge und Querschnitt des Zulaufes fällt der Füllgradfaktor unter 0,5 bis zur kompletten Zulaufverhinderung in die Schleuse.

Um dies zu vermeiden, wurden viele Lösungen zur Leckluftabführung vorgeschlagen.

Zu erwähnen ist der sogenannte Lecklufttrichter, wo im hochdrehenden Bereich im Einlauf der Schleuse die Leckluft abgenommen und im abwärtsdrehenden Bereich das Schüttgut zugeführt wird. Die Trennung der Bereiche erfolgt mit einem Leitblech im Gehäuseeinlauf. Nachteilig ist hier eine auftretende Kurzschlußströmung von Schüttgut in die Leckluftleitung, und nicht selten muß diese 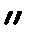 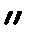 zweite" unerwünschte Förderung mit zusätzlicher Luft unterstützt zum Silodach zurückgeführt werden.

Aus der Offenlegungschrift DE 14 81 471 ist ein mit einem Entlastungskegel versehener Siloauslauf mit nachfolgender Druckschleuse bekannt geworden, wobei die Abführung der Leckluft in der Druckschleuse durch eine Öffnung im Seitenschild des Gehäuses auf der aufwärtsdrehenden Seite geschieht. Dabei wird das Entlüftungsrohr aus der Druckschleuse bis unter den Entlastungskegel geführt. Eine Kurzschlußströmung von Schüttgut in die Leckluftleitung wird nur dann verhindert, wenn sich beim Drehen immer ein Steg zwischen Einlauf und Leckluftabführungsöffnung befindet. Die Folge sind zu kleine Abluftöffnungen, da das geometrische Dilemma - größtmögliche Einlauf und Auslaufflächen mit dazwischenliegender Mantelfläche für mindestens zwei Stege plus Abluftschlitze plus eine Stegabdichtung zum Einlauf - immer nur einen Kompromiß zuläßt.

Der Erfindung liegt daher die Aufgabe zugrunde, eine Zellenradschleuse mit integrierter Leckluftabführung zu schaffen, die die Zulaufbeeinflussung auch bei höheren Förderdrücken im wesentlichen beseitigt.

Diese Aufgabe ist erfindungsgemäß durch die im Kennzeichen des Anspruches 1 angegebenen Merkmale gelöst.

Der Erfindung liegt der Gedanke zugrunde, daß man die Leckageluft innerhalb der Spaltströmung an die Stelle leitet, wo sie mit der Kammerexpansion ohne Behinderung des Zulaufes, nämlich im toten Winkel zwischen rundem Zulaufquerschnitt und rechteckigem Übergang an die zylindrische Bohrung des Gehäuses durch zwei Ablauföffnungen abgenommen und über eine abscheiderähnliche Ausbildung des Zwischenstückes zwischen Vorlagebehälter und Zellenradschleuse vom Spritzkorn getrennt einem Filtersack zugeführt werden kann.

Das Wesen der vorliegenden Erfindung liegt also darin, daß man in einem relativ großdimensionierten Einlaufbereich im Bereich des Einlauftrichters ein Einbahnstraßen-System schafft, welches dafür sorgt, daß das Produkt über den Einlauftrichter ungehindert und ungestört in die Zellenradkammern des Zellenrades einlaufen kann und daß die in diesem Bereich in Gegenrichtung zur Einlaufrichtung wirkende Leckluft zulaufunschädlich abgeführt wird.

Hierzu ist erfindungsgemäß vorgesehen, daß im Einlaufbereich, nämlich gegenüberliegend im Bereich der Durchbruchöffnung für den Zulauf zwei seitliche Entlüftungsbohrungen angeordnet sind und die Zellenradstege zur Verbesserung der Expansion in ihren Seitenbereichen relativ schmal profiliert sind, während sie im Mittenbereich eine mehrfach verdickte Stegverbreiterung an ihrer Außenseite aufweisen.

Diese Entlüftungsbohrungen mit den daran anschließenden Entlüftungskanälen sitzen an der aufwärtsdrehenden Seite des Zellenrades im Gehäuse, und zwar in dem toten Winkelbereich, der dadurch definiert ist, daß die Einlauföffnung rundprofiliert ist und die Anbindung an die zylindrische Bohrung rechteckig ausgebildet ist.

Unter 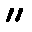 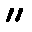 Anbindung an die zylindrische Bohrung" wird die Durchbruchöffnung verstanden, die fensterförmig ausgebildet ist und den Zulauf des Materials in die rundprofilierte zylindrische Gehäusekammer der Zellenradschleuse bildet.

Auf diese rechteckförmige Durchbruchöffnung, welche die Mantelfläche des Gehäuses der Zellenradschleuse durchbricht, wird also der zylinderförmige (rundprofilierte) Einlauftrichter aufgesetzt. Der Einlauftrichter hat hierbei eine kreisförmig ausgebildete Zulauföffnung, welche in kurzem Abstand zu der Durchbruchöffnung im Gehäuse der Zellenradschleuse gegenübersitzt.

Es bildet sich somit ein übergangsstück von der kreisrunden Zulauföffnung in Richtung zu der rechteckförmigen Durchbruchöffnung in der Mantelfläche des Gehäuses der Zellenradschleuse.

In diesem Bereich sind erfindungsgemäß an der aufwärtsdrehenden Seite der Zellenradstege die Entlüftungskanäle mit den zugeordneten Bohrungen angeordnet.

Daraus folgt, daß diese Entlüftungsbohrungen mit den sich daran anschließenden Entlüftungskanälen außerhalb der rundprofilieren Zulauföffnung liegen und im Bereich der rechteckförmigen Durchbruchöffnungen angeordnet sind.

Mit der Anordnung der Entlüftungsöffnungen zur Abführung der Leckluft in den Einlauftrichter hinein werden also folgende Vorteile erreicht:

Zunächst wird eine sich im Spalt zwischen der Außenkante des Zellenradsteges und dem Innenumfang des Gehäuses bildende Leckluft über diese Entlüftungsbohrungen mit den daran anschließenden Entlüftungskanälen abgeführt. Die Leckluft wird somit unschädlich gemacht und kann somit das einlaufende, zu fördernde Gut nicht mehr behindern.

Die Entlüftungskanäle mit den anschließenden Entlüftungsbohrungen haben den weiteren Vorteil, daß jetzt jede Kammer, bevor sie in die Durchbruchöffnung zwecks Füllung ihrer Zellenradkammer gelangt, vorher über die beschriebenen Entlüftungskanäle entlüftet wird, d.h. der eigentlich dort bestehende Überdruck wird über die Entlüftungsbohrungen mit den daran anschließenden Entlüftungskanälen abgebaut.

Bevor also eine derartige Zellenradkammer im Bereich der Durchbruchöffnung zwecks Füllung mit Material kommt, ist ihr Volumen vollständig entspannt und es kann deshalb nicht vorkommen, daß ein eventuell dort noch bestehender Überdruck erst im Bereich der Durchbruchöffnung sich entspannt und hierbei eine schädliche Gegenströmung entsteht, die dem Materialzufluß entgegengerichtet ist.

Ein vorteilhafter Effekt ergibt sich durch die erfindungsgemäße Entlüftung jeder Kammer dadurch, daß in jeder aufwärtsgehenden Zellenradkammer noch sogenanntes Spritzkorn vorhanden ist, welches unerwünscht ist, weil es dem Förderstrom entzogen ist.

Dieses Spritzkorn nun wird auf einfache Weise bei der erfindungsgemäßen Entlüftung der Zellenradkammer entfernt, dadurch, daß während der Entlüftung (Kammerexpansion) dieser Spritzkorn über die Entlüftungsbohrung in den Entlüftungskanal übergeführt wird und von diesem Entlüftungskanal wird dieses Spritzkorn über ein Rohrstück in eine Ringkammer eingeführt, welche am Außenumfang des Einlauftrichters angeordnet ist. Diese Ringkammer hat Nebenöffnungen, welche nach unten gerichtet wieder in die Zulauföffnung münden, so daß das Spritzkorn wieder in den Förderstrom mit eingeführt wird.

Die Rückführung des Spritzkornes in den Förderstrom hat also den wesentlichen Vorteil, daß kein Material dem Förderstrom entzogen wird und als totes Material in der Zellenradschleuse umläuft.

Das entlüftete Kammervolumen und der Leckluftstrom wird nach Durchlaufen der Ringkammer dadurch vorgereinigt, weil ja das Spritzgut abgeschieden wird und danach verläßt dieser Luftstrom über einen Entlüftungskanal die Zellenradschleuse.

Die Zellenradstege sind in bestimmter Weise profiliert, um den Wirkungsgrad der Expansion noch zu verbessern und um ferner zu gewährleisten, daß nur seitlich an den Zellenradstegen Leckluftströme entstehen, während mittig des Zellenrades derartige Leckluftströme verhindert werden sollen.

Erfindungsgemäß ist nämlich vorgesehen, daß die Zellenradstege nur in ihren Außenbereichen, d.h. im Anschluß an die Seitenscheiben des Zellenrades relativ schmal profiliert sind und z.B. eine Dicke von 8 bis 10 mm aufweisen, währenddessen in einem Mittenbereich des Zellenrades eine mehrfach verdickte Stegverbreiterung vorhanden ist, die z.B. eine Dicke von einem mehrfachen der vorher beschriebenen Stegbreite aufweisen. Bevorzugt sind diese Stegverbreiterungen im Steitenprofil Y-förmig profiliert, d.h., es sind dreiecksförmige Verdickungen auf die im seitlichen Bereich abgekröpften schmaleren Stege aufgesetzt.

Aus fertigungstechnischen Gründen sind also die schmaleren Stegbereiche abgekröpft, um dann im Mittenbereich dieser abgekröpften schmaleren Stegbereiche die im Profil dreiecksförmigen Stegverbreiterungen anschweißen zu können.

Die axiale Länge dieser Stegverbreiterungen bilden somit eine Drosselstrecke, die dafür sorgt, daß in diesem Bereich der Stegverbreiterungen relativ breite Deckflächen sich in Richtung zu dem Innenumfang des Gehäuses ergeben, wodurch ausgezeichnete Abdichtungsverhältnisse sich ergeben. In diesem Bereich werden also aufgrund der großdimensionierten Deckflächen dieser Stegverbreiterungen nicht mit Leckluftströmungen zu rechnen sein. Derartige Leckluftströmungen finden dann nur außerhalb dieser Stegverbreiterungen im Bereich der schmaleren Zellenradstege statt.

In diesem Bereich sind aber erfindungsgemäß die Entlüftungsbohrungen mit den daran anschließenden Entlüftungskanälen angeordnet, so daß die Leckluftströme auf einfache Weise nur in diesem Bereich erzeugt und gleichzeitig auch in diesem Bereich unschädlich gemacht und nach außen abgeführt werden.

Die Stegverbreiterungen bilden also in der Gehäusemitte praktisch Dichtzonen, die von Leckluftströmen nicht berührt werden und sie decken gleichzeitig die rechteckförmige Durchbruchöffnung in der Mantelfläche des Gehäuses ab, während die Zellenradkammern seitlich bereits schon in den schmaleren Zellenradsteg-Bereichen bereits schon entlüftet werden. Es handelt sich also um eine zeitliche Voreilung, d.h. die seitlichen Bereiche der jeweiligen Zellenradkammern werden bereits schon über die schmaleren Zellenradstege entlüftet, während im Mittenbereich die Kammer noch abgedeckt im Gehäuse bleibt. Damit ist sichergestellt, daß die Kammer erst dann gefüllt werden kann, wenn sie über die seitlichen, schmaleren Zellenradsteg-Bereiche vorher entlüftet wurde.

Es handelt sich also hierbei um eine Voreilung, die dafür sorgt, daß zunächst über die schmaleren Zellenradstege die Entlüftung der jeweiligen Zellenradkammer stattfindet, wobei die Zellenradkammer nach oben über die Stegverbreiterungen abgedeckt ist und gegen Befüllung geschützt ist, und erst wenn diese Entlüftung stattgefunden hatte, gelangen die Stegverbreiterungen in den Bereich der rechteckförmigen Durchbruchöffnung im Gehäuse und erst danach kann die Zellenradkammer nach vollständiger Expansion befüllt werden. Mit der Anordnung derartiger Stegverbreiterungen gewinnt man noch eine zusätzliche Einlauffläche, die sonst im Gußgehäuse der Zellenradschleuse geschlossen bleiben müßte.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.
Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellende Zeichnungen näher erläutert. Hierbei gehen aus den Zeichnungen und ihrer Beschreibung erfindungswesentliche Merkmale und Vorteile der Erfindung hervor.

Es zeigen:
- Figur 1:: schematisiert einen Schnitt durch eine Zellenradschleuse nach der Erfindung;
- Figur 2:: ein Zellenrad in perspektivischer Seitenansicht;
- Figur 3:: ein Schnitt durch ein Zellenrad nach Figur 2;
- Figuren 4 bis 12:: Phasendarstellung der Drehung des Zellenrades jeweils im Schnitt (Figuren 4,6,8,10,12) und in Draufsicht (Figuren 5,7,9,11,13).

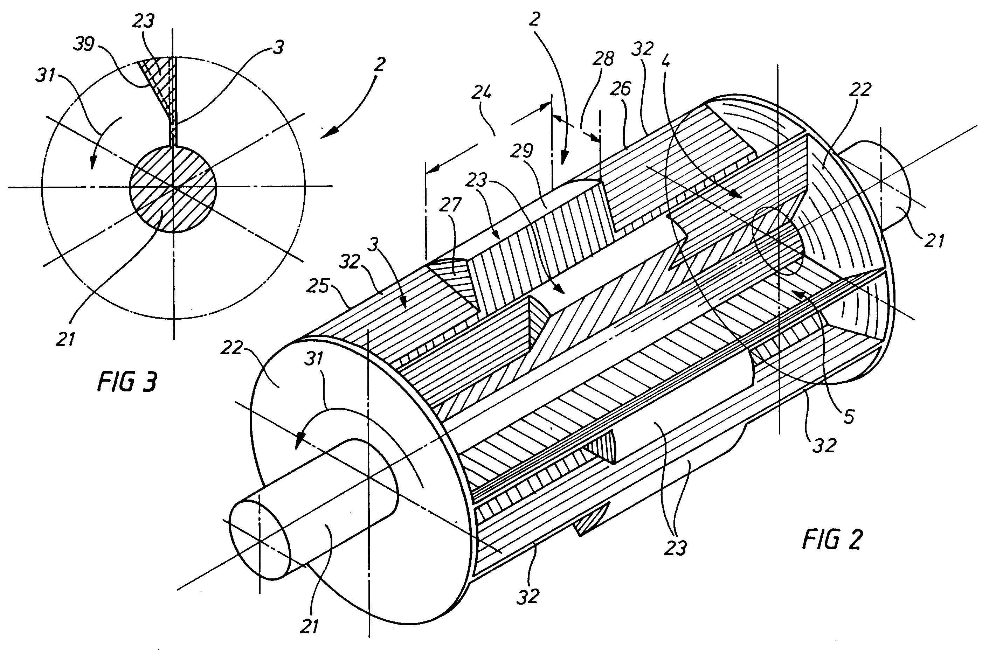

Die Zellenradschleuse nach der vorliegenden Erfindung besteht aus einem zylinderförmigen Gehäuse 1, in dem ein Zellenrad 2 mit einer Achse 21 drehbar gelagert und angetrieben ist. Gemäß Figur 2 besteht das Zellenrad 2 aus an der Achse 21 anschließenden Seitenscheiben 22.

Der Einlaufbereich der Zellenradschleuse wird gebildet durch einen zylindrischen Einlauftrichter, der an seiner Auslaufseite eine rundprofilierte Zulauföffnung 30 ausbildet.

Der Einlauftrichter 6 wird an seinem AUßenumfang von einer radialen Ringkammer 16 umgeben.

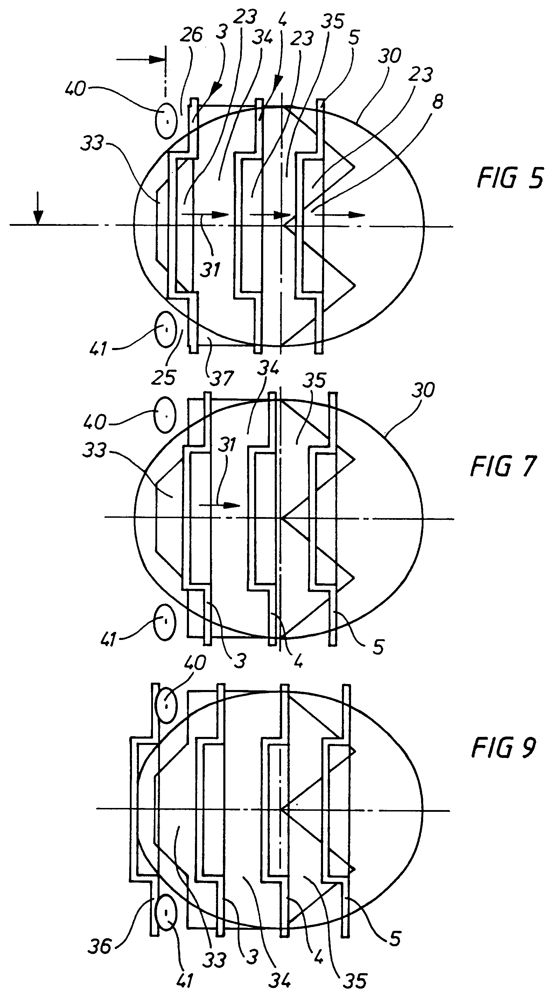

Unterhalb der Zulauföffnung 30 ist im Einlaufbereich ein Pflug 8 angeordnet, der etwa W-förmig profiliert ist, wie es in Figur 5 dargestellt ist.

Aufgabe dieses Pfluges 8 ist es, das Blockieren des Zellenrades 2 durch einlaufendes Granulat zu verhindern.

Das Material wird also über den Einlauftrichter 6 in Pfeilrichtung 7 zugeführt und gelangt über die rundprofilierte Zulauföffnung 30 in die rechteckförmige Durchbruchöffnung 37 im Gehäuse 1, wo das Material in die nacheinander sich öffnenden Zellenradkammern 33,34,35 einläuft.

Das Zellenrad 2 dreht sich hierbei in Pfeilrichtung 31.

Das Zellenrad 2 besteht aus einzelnen, relativ schmalprofilierten Zellenradstegen 3,4,5 (Vergleiche Figur 2), wobei in einer bevorzugten Ausführungsform diese Zellenradstege 3 in Drehrichtung nach vorne abgekröpft sind (Vergleiche Abkröpfung 39 in Figur 3) und in Laufrichtung (Pfeilrichtung 31) nach hinten gesehen sind im Mittenbereich des jeweiligen Zellenradsteges 3,4,5 Stegverbreiterungen 23 an diese Zellenradstege 3-5 angeformt.

Gemäß den Figuren 2 und 3 bestehen diese Stegverbreiterungen 23 etwa aus dreiecksförmig profilierten Stahlprofilen, die an die Abkröpfungen 39 angeschweißt sind.

Die Stegverbreiterungen 23 bilden somit relativ großdimensionierte Deckflächen 29, die eine ausgezeichnete Abdichtung zu dem Innenumfang des Gehäuses 1 ergeben. In diesem Bereich der Deckflächen 29 wird also eine Leckluftströmung weitgehend verhindert.

Die axiale Länge dieser Stegverbreiterungen 23 bildet also eine Drosselstrecke 24 zwischen den Abluftlöchern, wobei gemäß Figur 2 diese Abluftlöcher (Entlüftungskanäle 12,13) Abluftbereiche 25,25 bilden, die nur im Bereich von den Seitenscheiben 22 ausgehend nach innen sich erstrecken und an den Stegverbreiterungen 23 enden.

Unter dem Begriff "Drosselstrecke" 24 wird also verstanden, daß die Leckluftströmungen durch diese Drosselstrecke 23 in gewißer Weise gelenkt werden. Dadurch wird erreicht, daß diese Leckluftströmungen nur im Bereich der schmäleren Stegprofile 32 der Zellenradstege 3,4,5 strömen und so unmittelbar zu den Entlüftungsbohrungen 40,41 zugeführt werden.

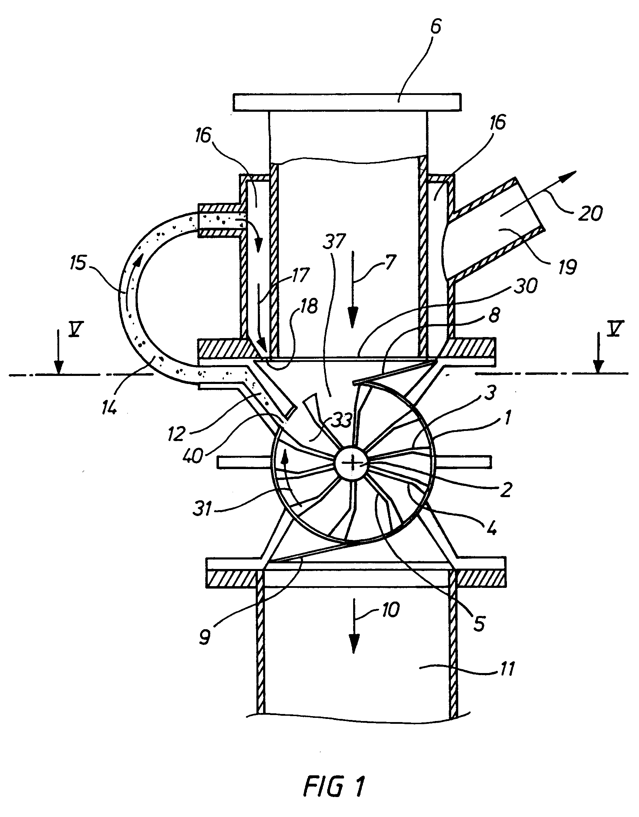

Es findet also eine Kammerexpansion statt, und zwar von der Zellenradkammer, die sich aufwärts in Pfeilrichtung 31 dreht und die sich dann genau in Gegenüberstellung zu den Entlüftungsbohrungen 40,41 befindet. In Figur 1 hat eine derartige Expansion bereits schon stattgefunden und die dort gezeigte Zellenradkammer 33 beginnt sich in Figur 1 bereits schon zu füllen.

Die expandierte Luft wird also über die Entlüftungsbohrung 40 in den Entlüftungskanal 12 eingeführt und gelangt dann über ein Rohrstück 14 in Pfeilrichtung 15 in die radiale Ringkammer 16, wo das Spritzkorn in Pfeilrichtung 17 nach unten in eine Nebenöffnung 18 eingeleitet wird und wieder dem Prozeßstrom zugemischt wird.

An der Auslaufseite ist in analoger Weise ein Auslauftrichter 11 angeordnet, der zu einer pneumatischen Förderleitung führt, wobei ebenfalls in analoger Weise wie beim Einlauftrichter 6 ein auslaufseitiger Pflug 9 angeordnet ist.

Das von der Zellenradschleuse geförderte Material verläßt also in Pfeilrichtung 10 den Auslauftrichter 11.

Aus den nachfolgend beschriebenen Zeichnungen ergibt sich im übrigen, daß die Entlüftungsbohrung 40 dem Entlüftungskanal 12 zugeordnet ist, während die gegenüberliegend (symmetrisch zur Längsmittenachse) angeordnete Entlüftungsbohrung 41 luftschlüssig mit dem Entlüftungskanal 13 verbunden ist.

Beide Entlüftungskanäle 12,13 münden in die vorher erwähnte Ringkammer 16, wobei das Material abgeschieden wird und die Luft dadurch vorgereinigt in den Entlüftungskanal 19 strömt und in Pfeilrichtung 20 die Zellenradschleuse verläßt.

Anhand der Figur 2 wurde bereits schon darauf hingewiesen, daß die Länge der Drosselstrecke 24 so bemessen ist, um eine Lenkung der Leckluftströme zu den Entlüftungsbohrungen 40,41 zu gewährleisten.

Die Länge der Drosselstrecke 24 ist hierbei bevorzugt 2/3 der Einlaufbreite, wobei unter dem Begriff "Einlaufbreite" der Durchmesser der kreisförmigen Zulauföffnung 30 verstanden wird.

Anhand der Phasendarstellungen in den nachfolgenden Figuren wird nun ein Bewegungsablauf in Verbindung mit der Expansion des jeweiligen Zellenradkammervolumens dargestellt.

Hierbei sind in paarweise aufeinanderfolgenden Zeichnungsfiguren jeweils eine Drehstellung des Zellenrades 2 angegeben.

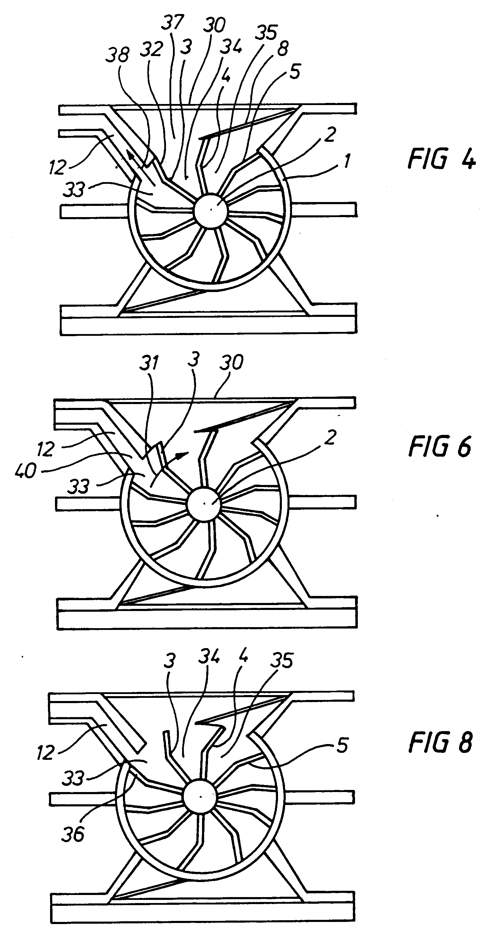

In der Situation nach den Figuren 4 und 5 ist die Expansion bereits schon erfolgt und das Kammervolumen wurde bereits schon in Pfeilrichtung 38 über die Entlüftungsbohrung 40 expandiert.

Gleichzeitig hat die Stegverbreiterung 23 bereits schon die Zellenradkammer 33 in den Bereich der Durchbruchöffnung 37 gebracht, wodurch die Füllung der Zellenradkammer 33 bereits schon wieder beginnt.

Bei weiterer Drehung des Zellenrades 2 in Pfeilrichtung 31 erfolgt die Situation nach den Figuren 6 und 7, wobei erkennbar ist, daß die Zellenradkammer 33 sich zunehmend in den Bereich der rechteckigen Durchbruchöffnung 37 bewegt und daher zunehmend mit dem Material gefüllt werden kann. Wichtig hierbei ist, daß eventuell noch bestehende Verdrängungsluft nach wie vor noch über die Entlüftungsbohrung 40 und den Entlüftungskanal 12 entweichen kann.

Die gesamte Drehung in Pfeilrichtung 31 erfolgt hierbei bei etwa 30 bis 50 Umdrehungungen pro Minute für das Zellenrad 2.

Bei der Situation nach den Figuren 8 und 9 nähert sich bereits schon die neue Kammer mit ihrem Zellenradsteg 36 der Entlüftungsbohrung 40, wobei noch keine Entlüftung stattfindet, denn das schmalere Stegprofil 32 liegt gemäß Figur 9 noch vor den Entlüftungsbohrungen 40,41, so daß noch keine Entlüftung stattfindet.

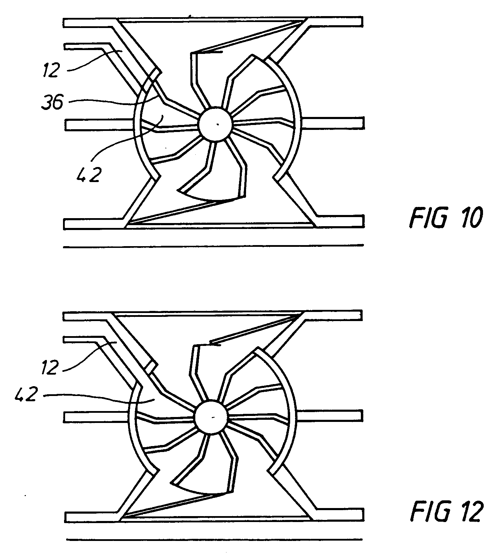

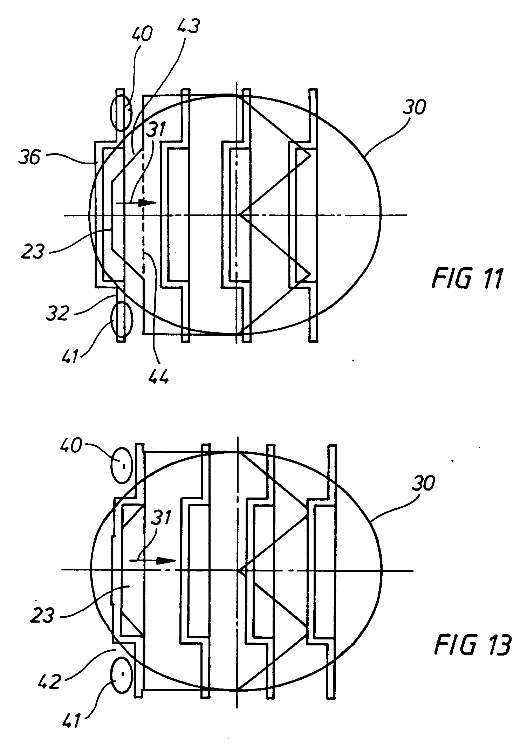

Die Entlüftung beginnt erst in der Situation der Figuren 10 und 11, wo erkennbar ist, daß sich jetzt die schmaleren Stegbereiche 32 bereits schon im Bereich der Entlüftungsbohrungen 40,41 befinden, während die Stegverbreiterung 23 noch die Zulauföffnung für diese Zellenradkammer 42 abdeckt. Die Kammer wird also erst entlüftet und wird in der Art eines Ventils von der Stegverbreiterung 23 abgedichtet und davor geschützt, während der Entlüftung bereits schon gefüllt zu werden.

In der Situation nach Figur 12 und 13 ist erkennbar, daß zu diesem Zeitpunkt die volle Kammerentlüftung über die Entlüftungsbohrungen 40,41 stattfindet; gleichzeitig aber immer noch die Stegverbreiterung 23 die Zellenradkammer 42 abdeckt, so daß diese gemäß Figur 13 außerhalb des Bereiches der kreisförmigen Zulauföffnung 30 sich befindet.

Erst beim Übergang der Figuren 12 und 13 auf die Figuren 4 und 5 schließt sich der Zyklus wieder und man erkennt, daß eine neue Zellenradkammer 33 (die funktionell mit der Zellenradkammer 42 übereinstimmt) nun nachfolgend gefüllt werden kann.

Aus dem dargestellten Phasenbild der Figuren 4 bis 13 wird also erkennbar, daß nacheinanderfolgend die Zellenradkammern 33-35 und 42 gefüllt werden aber nur dann, wenn sie vollständig vorher entlüftet und expandiert sind.

Die Anbringung solcher als Ventil wirkende Stegverbreiterungen 23 hat im übrigen den Vorteil, daß man gemäß Figur 11 eine trapezförmige Zusatzfläche 43 zur Vergrößerung der kreisringförmigen Zulauföffnung 30 anbringen kann, wodurch der Einlaufquerschnitt wesentlich erweitert wird und damit eine bessere Füllung der Zellenradschleuse erreicht wird.

Die Anbringung der erfindungsgemäßen Stegverbreiterung 23 an den Zellenradstegen 3,4,5 hat den Vorteil, daß man die Leckluftrate um 25% senken kann gegenüber einer Leckluftrate bei durchgehend schmal ausgebildeten Stegprofilen 32.

Bei der vorliegenden Erfindung ergänzen und fördern sich mehrere Merkmale. Einerseits wird eine großdimensionierte Zulauföffnung dadurch erreicht, daß Stegverbreiterungen im Mittenbereich der Zellenradstege angeordnet sind, wodurch es möglich ist, im Einlaufbereich trapezförmige Zusatzflächen anzubringen, um die Zulauföffnung noch größer zu dimensionieren. Ferner hat sich gezeigt, daß im Bereich außerhalb der Zulauföffnung 30 angeordnete Entlüftungsbohrungen 40,41 eine optimale Entlüftung der einzelnen Zellenradkammern ergeben und daß durch die Stegverbreiterungen die Leckluftströmungen sich nur im Außenbereich (im Bereich der Seitenscheiben 22) des Zellenrades 2 ergeben, wodurch diese Leckluftströmungen gezielt auf die Entlüftungsbohrungen 40,41 gelenkt werden.

Es wird also einerseits eine hohe Entlüftungsleistung und andererseits eine außerordentlich großdimensionierte Zulauföffnung erreicht, wobei es erstmals möglich ist, daß bei hohen Drehzahlen von z. B. 40-60 Umdrehungen pro Minute und Gegendrücken von 2-3 bar bei handelsüblichem Kunststoffgranulat als Fördermaterial Füllungsgrade von 70% für die jeweiligen Zellenradkammern 33-35, 42 erreicht werden können.

Ohne die erfindungsgemäßen Maßnahmen konnten bisher nur Füllungsgrade von weniger als 50 % erreicht werden.

Dank dieses größeren Füllungsgrades für die Zellenradkammern können somit kleiner dimensionierte Schleusen verwendet werden, wobei diese kleiner dimensionierten Schleusen eine gleich große Förderleistung erreichen wie die vorher bekannten größer dimensionierten Zellenradschleusen. Damit sind wesentliche Kostenverminderungen gegeben und außerdem wird durch die Verminderung der Leckluft es möglich, kleinere Förderkompressoren zu bauen. Es entfallen somit teure Abluftleitungen zum Silodach.

## Patentansprüche

1. Zellenradschleuse für rieselfähiges Schüttgut in pneumatischen Förderleitungen, wobei in einem Gehäuse (1) mit Durchbruchöffnung für Zu- und Ablauf ein eine Vielzahl von Kammern (33) aufweisendes Zellenrad (2) angeordnet ist, wobei die Kammer (33) durch Zellenradstege (3) voneinander getrennt sind und weiterhin an der aufwärts drehenden Seite des Zellenrades (2) eine seitliche Entlüftungsbohrung (40,41) mit einem leckluftabfuhrenden Entlüftungskanal (12,13) vorgesehen ist, **dadurch gekennzeichnet**, daß zwei Entlüftungsbohrungen (40,41) gegenüberliegend im Bereich der Durchbruchöffnung (37) für den Zulauf vorhanden sind und die Zellenradstege (3) zur Verbesserung der Expansion in ihren Seitenbereichen relativ schmal profiliert sind, während sie im Mittenbereich eine mehrfach verdickte Stegverbreiterung (23) an ihrer Außenseite aufweisen.

2. Zellenradschleuse nach Anspruch 1, **dadurch gekennzeichnet**, daß die Leckluft bzw. das Spritzkorn in jeder Kammer (33) des Zellenrades (2) über die Entlüfungsbohrungen (40) in die Entlüftungskanäle (12) übergeführt werden und von dort über ein Rohrstück (14) in eine Ringkammer (16) am Außenumfang des Einlauftrichters (6) geführt werden und dann über Nebenöffnungen (18) in die Zulauföffnung (30) gelangen.

3. Zellenradschleuse nach den Ansprüchen 1 und 2, **dadurch gekennzeichnet**, daß die Stegverbreiterungen (23) im Querschnitt Y-förmig profiliert sind, wobei dreiecksförmige Verdickungen auf die im äußeren Bereich abgekröpften schmaleren Stege (3) aufgesetzt sind.

4. Zellenradschleuse nach Anspruch 3, **dadurch gekennzeichnet**, daß die Länge der Stegverbreiterungen (23) etwa 2/3 des Durchmessers der Zulauföffnung (30) beträgt.

5. Zellenradschleuse nach den Ansprüchen 1 bis 4, **dadurch gekennzeichnet**, daß die seitlichen Entlüftungen des Zellenrades (2) über Entlüftungskanäle (12) zeitlich voreilen gegenüber dem Mittenbereich der Zellenradkammer, wo die Verdickungen der Zellenradstege (3) ausgebildet sind.

## Claims

1. A bucket wheel sluice for fluid loose material in pneumatic conveying lines, in which a bucket wheel (2) having a plurality of chambers (33) is arranged in a housing (1) with perforation openings for inflow and outflow, the chambers (33) being separated from each other by bucket wheel cross-pieces (3) and in addition, on the upwardly rotating side of the bucket wheel (2), a lateral ventilation bore (40, 41) is provided, having a ventilation duct (12, 13) carrying away leakage air, characterised in that two ventilation bores (40, 41) are present, lying opposite each other in the region of the perforation opening (37) for inflow, and the bucket wheel cross-pieces (3) are profiled relatively narrow in their marginal regions to improve the expansion, whilst in the central region they have on their outer side a cross-piece widening (23) which is thickened in a multiple manner.

2. A bucket wheel sluice according to Claim 1, characterised in that the leakage air or the spray grain in each chamber (33) of the bucket wheel (2) are transferred via the ventilation bores (40) into the ventilation ducts (12) and from there are carried via a pipe piece (14) into an annular chamber (16) on the outer circumference of the inflow hopper (6) and then arrive into the inflow opening (30) via auxiliary openings (18).

3. A bucket wheel sluice according to Claims 1 and 2, characterised in that the cross-piece widenings (23) are profiled in a Y-shape in cross-section, triangular thickenings being placed onto the narrower cross-pieces (3) which are angularly bent in the outer region.

4. A bucket wheel sluice according to Claim 3, characterised in that the length of the cross-piece widenings (23) amounts to approximately 2/3 of the diameter of the inflow opening (30).

5. A bucket wheel sluice according to Claims 1 to 4, characterised in that the lateral ventilations of the bucket wheel (2) via ventilation ducts (12) are chronologically ahead with respect to the central region of the bucket wheel chamber, where the thickenings of the bucket wheel cross-pieces (3) are constructed.

## Revendications

1. Vanne à roue cellulaire pour des produits en vrac fluides dans des conduites d'alimentation pneumatiques, étant précisé qu'une roue cellulaire (2) comportant plusieurs chambres (33) est disposée dans un carter (1) pourvu d'ouvertures pour l'amenée et l'évacuation, que les chambres (33) sont séparées les unes des autres par des arêtes de roue cellulaire (3) et qu'il est prévu, sur le côté de la roue cellulaire (2) qui tourne vers le haut, un perçage d'aération latéral (40, 41) comportant un conduit d'aération (12, 13) qui évacue l'air de fuite, caractérisée en ce qu'il est prévu deux perçages d'aération (40, 41) situés l'un en face de l'autre dans la zone de l'ouverture (37) prévue pour l'amenée, et les arêtes de roue cellulaire (3), pour une meilleure expansion, ont un profil relativement étroit dans leurs zones latérales tandis que dans leur zone centrale, elles présentent un élargissement d'arête épaissi plusieurs fois (23), sur leur côté extérieur.

2. Vanne à roue cellulaire selon la revendication 1, caractérisée en ce que l'air de fuite et les grains injectés qui se trouvent dans chaque chambre (33) de la roue cellulaire (2) sont transférés par l'intermédiaire des perçages d'aération (40) dans les conduits d'aération (12) d'où ils sont transférés par l'intermédiaire d'une tubulure (14) dans une chambre annulaire (16) située sur la circonférence extérieure de la trémie d'entrée (6), pour arriver ensuite par l'intermédiaire d'ouvertures secondaires (18) dans l'ouverture d'amenée (30).

3. Vanne à roue cellulaire selon les revendications 1 et 2, caractérisée en ce que les élargissements d'arêtes (23) ont une section transversale profilée en Y, des épaississements triangulaires étant posés sur les arêtes (3) plus étroites coudées dans la zone extérieure.

4. Vanne à roue cellulaire selon la revendication 3, caractérisée en ce que la longueur des élargissements d'arêtes (23) est égale à environ 2/3 du diamètre de l'ouverture d'amenée (30).

5. Vanne à roue cellulaire selon les revendications 1 à 4, caractérisée en ce que les aérations latérales de la roue cellulaire (2) par l'intermédiaire des conduits d'aération (12) ont lieu plus tôt par rapport à la zone centrale de la chambre de roue cellulaire où sont formés les épaississements des arêtes de roue cellulaire (3).
